# EUROPÄISCHE PATENTSCHRIFT

(11) **EP 4 117 966 B1**
(45) Veröffentlichungstag und Bekanntmachung des Hinweises auf die Patenterteilung: **20.09.2023**
(21) Anmeldenummer: 21703470.1
(22) Anmeldetag: 10.02.2021
(51) Int. Cl.: B60Q 1/50, B60Q 1/52, B60Q 1/26, F21S 43/14, F21S 43/15, F21S 43/19, F21S 43/237, F21S 43/245, F21S 43/20, F21S 43/27

(54) **KRAFTFAHRZEUG**
MOTOR VEHICLE
VÉHICULE AUTOMOBILE

(30) Priorität: 12.03.2020 EP 20162618
(43) Veröffentlichungstag der Anmeldung: 18.01.2023
(73) Patentinhaber: ZKW Group GmbH, 3250 Wieselburg (AT)
(72) Erfinder: WAGNER, Florian, 3300 Winklarn (AT); MITTERLEHNER, Stefan, 3240 Mank (AT); BRUNNER, Michael, 3650 Pöggstall (AT); SALZER, Michael, 3261 Wolfpassing (AT)
(74) Vertreter: Patentanwaltskanzlei Matschnig & Forsthuber OG
(86) Internationale Anmeldenummer: PCT/EP2021/053175
(87) Internationale Veröffentlichungsnummer: WO 2021/180408

(56) Entgegenhaltungen:
- EP-A1- 3 357 754
- WO-A1-2017/079349
- WO-A1-2019/035433
- DE-A1-102004 015 544
- DE-U1-202015 004 772
- DE-U1-202016 007 703
- DE-U1-202017 105 259
- US-A1- 2016 258 591
- US-A1- 2018 304 801
- US-B1- 10 112 528

## Beschreibung

Die Erfindung betrifft ein Kraftfahrzeug, welches in einem selbstfahrenden Zustand betreibbar ist, wobei das Kraftfahrzeug ein adaptives Beleuchtungssystem zum Erzeugen von adaptiven Lichtsignalbotschaften an einzelne Verkehrsteilnehmer umfasst, welches Beleuchtungssystem zumindest eine Leuchteinrichtung und eine Steuereinrichtung zur Steuerung der zumindest einen Leuchteinrichtung umfasst.

Die Kommunikation zwischen anderen Verkehrsteilnehmern und von Menschen gelenkten Fahrzeugen erfolgt grundsätzlich über Blickkontakt, Gesten oder visuelle/auditive (Warn)Signale wie Lichthupe oder Hupe.

Die Beleuchtungsfunktionen von Fahrzeugen als sicherheitsrelevante Maßnahmen und als Kommunikationsmittel zur Kommunikation mit anderen Verkehrsteilnehmern wird zunehmend an Bedeutung gewinnen, wenn Fahrzeuge nicht mehr von einem Menschen gelenkt werden, sondern vollständig autonom oder teilweise autonom, z.B. über einen autonomen, den Fahrer entlastenden Selbstfahrmodus, agieren. Die Beleuchtungsfunktionen werden sich dann nicht mehr an der Wahrnehmung der menschlichen Verkehrsteilnehmer orientieren, sondern an den Anforderungen für technische Einrichtungen (Sensoren, Kamerasysteme, etc.) des selbstfahrenden Fahrzeugs. Diese technischen Einrichtungen können wünschenswerter Weise eine vorliegende Umfeldsituation zuverlässig erkennen und bewerten, sodass auf Grundlage der erfassten Situation, insbesondere einer Gefahrensituation, entsprechende Kommunikationssignale an die anderen Verkehrsteilnehmer wie Fußgänger, Radfahrer und nicht-autonome Fahrzeuge übermittelt werden. Eine besondere Herausforderung hinsichtlich des Einsatzes autonomer Fahrzeuge, stellen dabei auch Verkehrsteilnehmer dar, welche sich nicht aktiv auf den Verkehr konzentrieren oder eine Verkehrssituation falsch einschätzen, beispielsweise Fußgänger und Kinder. Diese Verkehrsteilnehmer können Fahrzeuge oder deren Beleuchtungsfunktionen leicht übersehen.

Der Begriff "selbstfahrendes Fahrzeug" (hierin auch als "autonomes Fahrzeug" bezeichnet) bezieht sich auf Fahrzeuge, insbesondere auf Kraftfahrzeuge (KFZ), die dazu eingerichtet sind, auch ohne Eingriff eines Fahrers, typischerweise Computer-gesteuert, bewegt werden zu können. Das selbstfahrende Fahrzeug kann beispielsweise vollständig autonom sein oder es kann ein Fahrzeug sein, das von einem aktiven Fahrer-betriebenen Fahrmodus zur Entlastung des Fahrers in einen autonomen Selbstfahrmodus umschaltbar ist. Das selbstfahrende Fahrzeug kann einspurig oder zweispurig, vorzugsweise zweispurig, sein. Beispielsweise kann es sich um einen Personenkraftwagen (PKW), einen Lastkraftwagen (LKW) oder um ein landwirtschaftliches Fahrzeug wie einen Traktor oder dergleichen handeln. Insbesondere handelt es sich bei dem selbstfahrenden Fahrzeug um einen PKW oder einen LKW.

Der Begriff "Verkehrsteilnehmer" bezieht sich auf alle sich typischerweise im Straßenverkehr befindlichen Objekte, wie andere Fahrzeuge und menschliche Verkehrsteilnehmer, wie Fußgänger oder Radfahrer.

US 2018/304801 A1 offenbart ein autonomes Fahrzeug, welches eine Fahrzeugkarosserie und eine Leuchtstreifenbaugruppe, die an der Fahrzeugkarosserie montiert ist, beinhaltet. Die Leuchtstreifenbaugruppe ist dazu ausgestaltet, eine Vielzahl von Streifenmustern zu emittieren, die sich visuell voneinander unterscheiden, um unterschiedliche Betriebszustände des autonomen Fahrzeugs anzuzeigen. Sie beinhaltet ein Gehäuse, eine oder mehrere Lichtquellen und eine oder mehrere optische Vorrichtungen. Das Gehäuse beherbergt die Lichtquelle(n) und die optische Vorrichtung(en) und kann zum Emittieren des von der Lichtquelle(n) erzeugten Lichts zumindest teilweise klar oder transparent sein. Die optische(n) Vorrichtung(en) fokussieren das von der Lichtquelle(n) emittierte Licht, wie zum Beispiel in einem engen Muster, das durch das Gehäuse emittiert werden kann.

Es ist eine Aufgabe der Erfindung, ein verbessertes Kraftfahrzeug bereitzustellen.

Diese Aufgabe wird durch die Merkmale des Anspruchs 1 gelöst.

Es kann vorgesehen sein, dass die Leuchteinrichtung horizontal umlaufend um das Kraftfahrzeug angeordnet ist.

Unter dem Begriff "horizontal umlaufend" wird verstanden, dass sich die zumindest eine Leuchteinrichtung sowohl über die beiden Längsseiten als auch die beiden Breitseiten des Kraftfahrzeuges erstreckt, beispielsweise entlang der Dachreling. Dabei muss die zumindest eine Leuchteinrichtung nicht genau horizontal zur jeweiligen Fahrbahn, auf welcher sich das Kraftfahrzeug (im Betrieb) befindet, ausgerichtet sein, sondern kann auch Abstufungen aufweisen, zu deren Verbindung wiederum ein Abschnitt der zumindest einen Leuchteinrichtung in einem Winkel zur Fahrbahn bzw. nicht mehr horizontal verläuft. Unter "horizontal umlaufend" wird nicht verstanden, dass die zumindest eine Leuchteinrichtung über die Bodenplatte und über das Dach des Kraftfahrzeuges verläuft, was einer vertikal umlaufenden Anordnung entsprechen würde.

Die zumindest eine Leuchteinrichtung kann beispielsweise Teil der Karosserie des Kraftfahrzeuges sein, beispielsweise als Ersatz für Zierleisten, die üblicherweise an den Kraftfahrzeugtüren unterhalb der Fenster vorhanden sind oder auch die Dachreling des Kraftfahrzeuges.

Die zumindest eine Leuchteinrichtung und die Steuereinrichtung können über das bereits vorhandene Kraftfahrzeugbordnetz betrieben werden.

Es kann vorgesehen sein, dass das Trägerelement eine Längserstreckung aufweist, wobei sich der Kabelkanal entlang der Längserstreckung des Trägerelements erstreckt.

Es kann vorgesehen sein, dass das Beleuchtungssystem zumindest zwei oder mehrere Leuchteinrichtungen umfasst, wobei die zumindest zwei oder mehreren Leuchteinrichtungen derart um das Kraftfahrzeug umlaufend angeordnet sind, dass bei gleichzeitiger Einschaltung jeder Leuchteinrichtung die Streuoptiken der Leuchteinrichtungen als optisch durchgehend leuchtender Leuchtring wahrnehmbar sind.

Bei Vorhandensein von zwei oder mehr Leuchteinrichtungen können die Leuchteinrichtungen zueinander einen physischen Abstand aufweisen, solange sie bei Einschaltung jeder Lichtquelle, beispielsweise Leuchtdiode (LED), einen als optisch durchgehend leuchtenden Leuchtring bilden.

In diesem Zusammenhang ist unter "durchgehend" zu verstehen, dass ein geschlossener Leuchtring gebildet wird, d.h. dass im eingeschalteten Zustand der Lichtquellen der Leuchtring optisch durchgehend bzw. geschlossen umlaufend um das Kraftfahrzeug erscheint bzw. wahrnehmbar ist. Dabei können die Leuchteinrichtungen physisch einen Abstand aufweisen, wie oben erwähnt. Es kann jedoch auch vorgesehen sein, dass die Leuchteinrichtungen auch physisch einen durchgehenden bzw. geschlossenen Leuchtring bilden.

Bei zwei oder mehrere Leuchteinrichtungen können diese derart zueinander bzw. aneinander angeordnet sein, dass sich der Kabelkanal einer Leuchteinrichtung an den Kabelkanal der unmittelbar benachbarten Leuchteinrichtung anschließt, sodass ein durchgehender Kabelkanal ermöglicht wird.

Es kann vorgesehen sein, dass die zumindest eine Lichtquelle als LED ausgebildet ist.

Es kann vorgesehen sein, dass die zumindest eine LED auf einer Leiterplatte angeordnet ist, welche Leiterplatte an dem Trägerelement angeordnet ist.

Es kann vorgesehen sein, dass die zumindest eine Lichtquelle als Lichtleiter mit einer LED ausgebildet ist, in welchen Lichtleiter Licht der LED einspeisbar ist.

Es kann vorgesehen sein, dass das erste Befestigungsmittel Schrauben und zugehörige Bohrungsöffnungen umfasst, wobei die Bohrungsöffnungen an dem Trägerelement angeordnet sind, über welche Bohrungsöffnungen das Trägerelement mittels der Schrauben an dem Kraftfahrzeug befestigbar ist.

Es kann vorgesehen sein, dass das zweite Befestigungsmittel Schrauben und zugehörige Bohrungsöffnungen umfasst, wobei die Bohrungsöffnungen an dem Trägerelement angeordnet sind, über welche Bohrungsöffnungen die Abdeckung mittels der Schrauben an dem Trägerelement befestigbar ist.

Es kann vorgesehen sein, dass die zumindest eine Lichtquelle der zumindest einen Leuchteinrichtung durch die Steuereinrichtung angesteuert und aktiviert sind, wenn sich das Kraftfahrzeug in dem selbstfahrenden Zustand befindet.

Es kann vorgesehen sein, dass die zumindest zwei oder mehreren Leuchteinrichtungen unabhängig voneinander durch die Steuereinrichtung ansteuerbar sind.

Es kann vorgesehen sein, dass das Kraftfahrzeug zumindest eine Sensoreinrichtung umfasst, welche eingerichtet ist, in der Umgebung des Kraftfahrzeugs befindliche Verkehrsteilnehmer jeweils einzeln zu erfassen und Änderungen der Relativposition zwischen dem Kraftfahrzeug und den einzelnen Verkehrsteilnehmern zu berücksichtigen.

Es kann vorgesehen sein, dass die zumindest eine Sensoreinrichtung eine bildsensorgestützte Kamera, ein Nahfeld-Infrarotsensor oder ein Ultraschallsensor ist.

Die zumindest eine Sensoreinrichtung zum einzelnen Erfassen anderer in der Fahrzeugumgebung befindlicher Verkehrsteilnehmer kann beispielsweise als bildsensorgestützte Kamera, Infrarotsensor und/oder Radarscanner realisiert sein. Darüber hinaus können auch LiDAR oder Ultraschallsysteme zum Einsatz kommen. Derartige Vorrichtungen sind aus dem Stand der Technik bekannt und können auch in Kombination miteinander eingesetzt werden, um die verschiedenen Vorteile zu nutzen. Die bildsensorgestützte Kamera kann die Funktionen einer normalen Kamera, einer Nachtsicht-Kamera und/oder einer Nebelsichtkamera umfassen, sodass bei allen Lichtverhältnissen und Witterungen eine zuverlässige und qualitativ ausreichende Erfassung der Fahrzeugumgebung und der beteiligten Verkehrsteilnehmer möglich ist. Es kann vorgesehen sein, dass die Kamera eine zusätzliche Infrarot-Kamerafunktion besitzt, um Menschen und Tiere auf Grundlage ihrer Körperwärme noch besser erfassen zu können.

Es kann vorgesehen sein, dass die Sensoreinrichtung bei Erfassen zumindest eines Verkehrsteilnehmers ein Signal an die Steuereinrichtung übermittelt, sodass die Steuereinrichtung jene Leuchteinrichtung ansteuert, welche dem zumindest einen erfassten Verkehrsteilnehmer am nächsten sind.

Es kann vorgesehen sein, dass die angesteuerten Lichtquellen ein farbiges Licht, beispielweise grünes und/oder rotes Licht, abstrahlen.

Es kann ferner vorgesehen sein, dass die Lichtfarbe der von den Lichtquellen erzeugten Lichtverteilung, die dem jeweils erfassten Verkehrsteilnehmer übermittelt wird, den Verkehrsteilnehmer darüber informiert, wie die Verkehrssituation durch das selbstfahrende Fahrzeug bewertet wird. Günstigerweise können hier Farben eingesetzt werden, die sich im Straßenverkehr als allgemein anerkannte Signale für gewisse Situationen durchgesetzt haben. Beispielsweise könnte die Farbe "Grün" dem Teilnehmer signalisieren, dass er von dem selbstfahrenden Fahrzeug erkannt wurde, die Situation daher im "grünen Bereich" liegt und der Teilnehmer keine Aktionen setzen muss. Die Farben "Gelb" oder "Orange" könnten dem Teilnehmer signalisieren, dass die Verkehrssituation gerade noch keine Gefahr birgt, dass aber eine Aktion des Verkehrsteilnehmers (z.B. stehenbleiben, abbremsen) erwartet wird. Die Farbe "Rot" könnte eine Gefahrensituation signalisieren, die sowohl seitens des Teilnehmers als auch seitens des selbstfahrenden Fahrzeugs Aktionen erfordert, um eine potentiell gefährliche Verkehrssituation oder einen Unfall zu verhindern.

Dabei kann es vorgesehen sein, dass der jeweils erfasste Verkehrsteilnehmer mittels einer Intensitätsmodulation der erzeugten Signallichtverteilung auf das selbstfahrende Fahrzeug aufmerksam gemacht wird. Die Intensitätsmodulation kann dabei Blinken, Blitzen, eine konstante Helligkeit mit überlagerten Blitzen oder eine Kombination davon umfassen. Die Intensitätsmodulation der erzeugten Signallichtverteilung stellt eine effiziente Maßnahme dar, um konkrete und unmittelbare Gefahren abwenden zu können.

Es kann auch vorgesehen sein, dass der Leuchtring dazu genutzt werden kann, Fahrtrichtungen anzuzeigen. Beispielsweise kann mit Hilfe der Leuchteinrichtungen des Leuchtrings ein Wischeffekt bei einer beabsichtigen Vorwärts- bzw. Rückwärtsbewegung des Fahrzeuges erzeugt werden.

Nachfolgend wird die Erfindung anhand von beispielhaften Zeichnungen näher erläutert. Hierbei zeigt
Fig. 1 einen Ausschnitt eines beispielhaften Kraftfahrzeuges mit einem Beleuchtungssystem, welches mehrere Leuchteinrichtungen umfasst, die horizontal umlaufend an dem Kraftfahrzeug angeordnet sind,
Fig. 2 eine beispielhafte Leuchteinrichtung in einer perspektivischen Ansicht,
Fig. 3 die beispielhafte Leuchteinrichtung aus Fig. 2 in einer perspektivischen Ansicht von unten,
Fig. 4A einen schematischen Querschnitt einer beispielhaften Leuchteinrichtung an einem Kraftfahrzeug,
Fig. 4B einen schematischen Querschnitt einer weiteren beispielhaften Leuchteinrichtung an einem Kraftfahrzeug,
Fig. 4C einen schematischen Querschnitt einer weiteren beispielhaften Leuchteinrichtung an einem Kraftfahrzeug,
Fig. 4D einen schematischen Querschnitt einer weiteren beispielhaften Leuchteinrichtung an einem Kraftfahrzeug, und
Fig. 4E einen schematischen Querschnitt einer weiteren beispielhaften Leuchteinrichtung an einem Kraftfahrzeug.

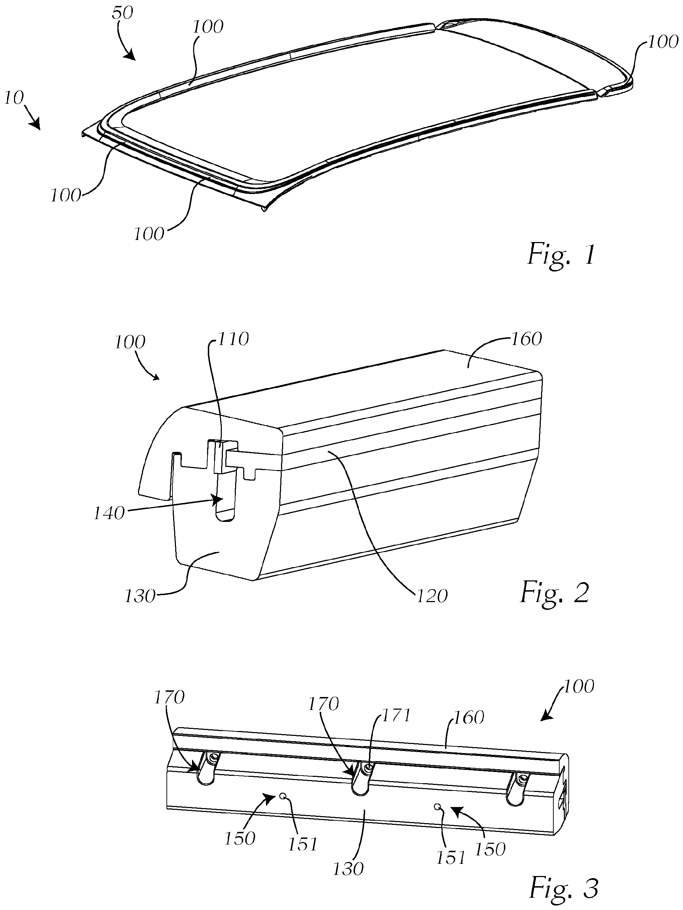

**Fig. 1** zeigt ein beispielhaftes Kraftfahrzeug **10,** welches in einem selbstfahrenden Zustand betreibbar ist, wobei das Kraftfahrzeug **10** ein adaptives Beleuchtungssystem **50** zum Erzeugen von adaptiven Lichtsignalbotschaften an einzelne Verkehrsteilnehmer umfasst, welches Beleuchtungssystem **50** mehrere Leuchteinrichtungen **100** und eine Steuereinrichtung zur Steuerung der Leuchteinrichtungen **100** umfasst. Die Leuchteinrichtungen **100** sind dabei derart um das Kraftfahrzeug **10** horizontal umlaufend angeordnet, dass bei gleichzeitiger Einschaltung jeder Leuchteinrichtung **100** die Streuoptiken **120** der Leuchteinrichtungen **100** als optisch durchgehend leuchtender Leuchtring wahrnehmbar sind.

Das Beleuchtungssystem **50** des beispielhaften Kraftfahrzeuges **10** ist ausgestaltet, dass die Lichtquelle **110** der Leuchteinrichtungen **100** durch die Steuereinrichtung angesteuert und aktiviert sind, wenn sich das Kraftfahrzeug in dem selbstfahrenden Zustand befindet. Ferner sind die Leuchteinrichtungen **100** unabhängig voneinander durch die Steuereinrichtung ansteuerbar.

Ferner kann das Kraftfahrzeug **10** zumindest eine Sensoreinrichtung umfassen, welche eingerichtet ist, in der Umgebung des Kraftfahrzeugs **10** befindliche Verkehrsteilnehmer jeweils einzeln zu erfassen und Änderungen der Relativposition zwischen dem Kraftfahrzeug **10** und den einzelnen Verkehrsteilnehmern zu berücksichtigen. Die Sensoreinrichtung kann dabei eine bildsensorgestützte Kamera, ein Nahfeld-Infrarotsensor oder ein Ultraschallsensor sein. Die Sensoreinrichtung kann bei Erfassen zumindest eines Verkehrsteilnehmers ein Signal an die Steuereinrichtung übermitteln, sodass die Steuereinrichtung jene Leuchteinrichtung bzw. Leuchteinrichtungen **100** ansteuert, welche dem zumindest einen erfassten Verkehrsteilnehmer am nächsten ist/sind.

Eine detaillierte Ansicht einer beispielhaften Leuchteinrichtung **100** ist in **Fig. 2** gezeigt, wobei die Leuchteinrichtung **100** eine Lichtquelle **110** umfasst, welche als LED oder mehrere LEDS auf einer Leiterplatte oder eine LED mit einem Lichtleiter ausgebildet sein kann.

Ferner umfasst die Leuchteinrichtung **100** eine der Lichtquelle **110** zugeordnete Streuoptik **120,** welche eingerichtet ist, das von der zumindest einen Lichtquelle **110** emittierbare Licht durch Brechung zu streuen, um einen diffusen Leuchteindruck der Streuoptik **120** zu ermöglichen.

Überdies umfasst die Leuchteinrichtung ein Trägerelement **130,** an welchem die Lichtquelle **110** angeordnet ist, wobei das Trägerelement **130** einen Kabelkanal **140** zur Führung zumindest einer elektrischen Leitung, welche die Lichtquelle **110** mit der Steuereinrichtung verbindet, und ein erstes Befestigungsmittel **150** zur Befestigung des Trägerelements **130** bzw. der Leuchteinrichtung **100** an dem Kraftfahrzeug. Das erste Befestigungsmittel **150** umfasst in dem gezeigten Beispiel Schrauben und zugehörige Bohrungsöffnungen **151,** wobei die Bohrungsöffnungen **151** an dem Trägerelement **130** angeordnet sind, über welche Bohrungsöffnungen **151** das Trägerelement **130** mittels der Schrauben an dem Kraftfahrzeug befestigbar ist, wobei das erste Befestigungsmittel **150** bzw. die Bohrungsöffnungen **151** in **Fig. 3** zu sehen sind.

Die Leuchteinrichtung **100** umfasst weiters eine Abdeckung **160,** welche mittels einem zweiten Befestigungsmittel **170** an dem Trägerelement **130** befestigbar ist, wobei die Abdeckung **160** in Kombination mit dem Trägerelement **130** in einem an dem Trägerelement **130** befestigten Zustand eingerichtet ist, die Streuoptik **120** zu halten.

Das zweite Befestigungsmittel **170** umfasst dabei Schrauben und zugehörige Bohrungsöffnungen **171,** wobei die Bohrungsöffnungen **171** an dem Trägerelement **130** angeordnet sind, über welche Bohrungsöffnungen **171** die Abdeckung **160** mittels der Schrauben an dem Trägerelement **130** befestigbar ist, wobei das zweite Befestigungsmittel **170** bzw. die Bohrungsöffnungen in **Fig. 3** zu sehen sind.

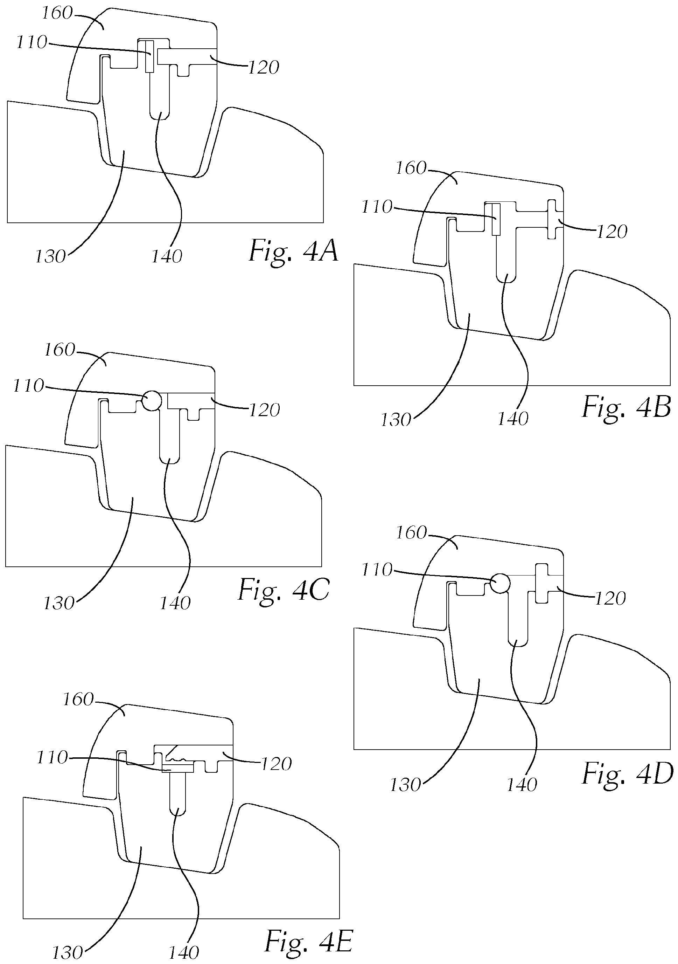

**Fig. 4A, 4B, 4C, 4D** und **4E** zeigen noch weitere Ausführungsbeispiele einer Leuchteinrichtung **100** in einer schematischen Querschnittsansicht. In Fig. **4A, 4B** und **4E** sind die Lichtquellen als LED auf einer Leiterplatte ausgebildet, wobei in Fig. **4E** die Streuoptik **120** zusätzlich eine Einkoppeloptik für das von der Lichtquelle emittierbare Licht aufweist, welche Einkoppeloptik beispielsweise als Kollimator ausgebildet ist, wobei das in den Kollimator eingekoppelte Licht über einen Umlenkbereich der Streuoptik aus der Streuoptik ausgekoppelt wird. Die LED bzw. die Leiterplatte mit der LED/LEDs ist dabei derart angeordnet, dass die Hauptabstrahlrichtung des emittierbaren Lichts in Richtung Abdeckung **160** bzw. in einem ordnungsgemäßen befestigten Zustand der Leuchteinrichtung an einem Kraftfahrzeug nach oben gerichtet ist.

Unter "Hauptabstrahlrichtung" ist die Richtung zu verstehen, in der die Leuchtdiode bzw. die Leuchtdioden infolge ihrer Richtwirkung am stärksten bzw. am meisten Licht abstrahlt/ abstrahlen.

**Fig. 4C** und **4D** zeigen Ausführungsbeispiele einer Leuchteinrichtung, bei welcher die Lichtquellen als Lichtleiter mit zumindest einer LED ausgebildet ist, in welchen Lichtleiter Licht der zumindest einen LED einspeisbar ist.

## Patentansprüche

1. Kraftfahrzeug (10), welches in einem selbstfahrenden Zustand betreibbar ist, wobei das Kraftfahrzeug ein adaptives Beleuchtungssystem (50) zum Erzeugen von adaptiven Lichtsignalbotschaften an einzelne Verkehrsteilnehmer umfasst, welches Beleuchtungssystem (50) zumindest eine Leuchteinrichtung (100) und eine Steuereinrichtung zur Steuerung der zumindest einen Leuchteinrichtung (100) umfasst,
wobei
die zumindest eine Leuchteinrichtung (100)
- zumindest eine Lichtquelle (110),
- zumindest einer der Lichtquelle (110) zugeordnete Streuoptik (120), welche eingerichtet ist, das von der zumindest einen Lichtquelle (110) emittierbare Licht durch Brechung zu streuen, um einen diffusen Leuchteindruck der Streuoptik (120) zu ermöglichen,
- ein Trägerelement (130), an welchem die zumindest eine Lichtquelle (110) angeordnet ist, wobei das Trägerelement (130) einen Kabelkanal (140) zur Führung zumindest einer elektrischen Leitung, welche die zumindest eine Lichtquelle (110) mit der Steuereinrichtung verbindet, und ein erstes Befestigungsmittel (150) zur Befestigung des Trägerelements (130) bzw. der Leuchteinrichtung (100) an dem Kraftfahrzeug umfasst,
- eine Abdeckung (160), welche mittels einem zweiten Befestigungsmittel (170) an dem Trägerelement (130) befestigbar ist, wobei die Abdeckung (160) in Kombination mit dem Trägerelement (130) in einem an dem Trägerelement (130) befestigten Zustand eingerichtet ist, die Streuoptik (120) zu halten, umfasst,
und wobei die zumindest eine Leuchteinrichtung (100) derart um das Kraftfahrzeug umlaufend angeordnet ist, dass bei Einschaltung der zumindest einen Leuchteinrichtung (100) die Streuoptik (120) als optisch durchgehend leuchtender Leuchtring wahrnehmbar ist.

2. Kraftfahrzeug nach Anspruch 1, **dadurch gekennzeichnet, dass** das Beleuchtungssystem (50) zumindest zwei oder mehrere Leuchteinrichtungen (100) umfasst, wobei die zumindest zwei oder mehreren Leuchteinrichtungen (100) derart um das Kraftfahrzeug umlaufend angeordnet sind, dass bei gleichzeitiger Einschaltung jeder Leuchteinrichtung (100) die Streuoptiken (120) der Leuchteinrichtungen (100) als optisch durchgehend leuchtender Leuchtring wahrnehmbar sind.

3. Kraftfahrzeug nach Anspruch 1 oder 2, **dadurch gekennzeichnet, dass** die zumindest eine Lichtquelle (110) als LED ausgebildet ist.

4. Kraftfahrzeug nach Anspruch 4, **dadurch gekennzeichnet, dass** die zumindest eine LED auf einer Leiterplatte angeordnet ist, welche Leiterplatte an dem Trägerelement (130) angeordnet ist.

5. Kraftfahrzeug nach Anspruch 1 oder 2, **dadurch gekennzeichnet, dass** die zumindest eine Lichtquelle (110) als Lichtleiter mit einer LED ausgebildet ist, in welchen Lichtleiter Licht der LED einspeisbar ist.

6. Kraftfahrzeug nach einem der Ansprüche 1 bis 5, **dadurch gekennzeichnet, dass** das erste Befestigungsmittel (150) Schrauben und zugehörige Bohrungsöffnungen (151) umfasst, wobei die Bohrungsöffnungen (151) an dem Trägerelement (130) angeordnet sind, über welche Bohrungsöffnungen (151) das Trägerelement (130) mittels der Schrauben an dem Kraftfahrzeug befestigbar ist.

7. Kraftfahrzeug nach einem der Ansprüche 1 bis 6, **dadurch gekennzeichnet, dass** das zweite Befestigungsmittel (170) Schrauben und zugehörige Bohrungsöffnungen (171) umfasst, wobei die Bohrungsöffnungen (171) an dem Trägerelement (130) angeordnet sind, über welche Bohrungsöffnungen (171) die Abdeckung (160) mittels der Schrauben an dem Trägerelement (130) befestigbar ist.

8. Kraftfahrzeug nach einem der Ansprüche 1 bis 7, **dadurch gekennzeichnet, dass** die zumindest eine Lichtquelle (110) der zumindest einen Leuchteinrichtung (100) durch die Steuereinrichtung angesteuert und aktiviert sind, wenn sich das Kraftfahrzeug in dem selbstfahrenden Zustand befindet.

9. Kraftfahrzeug nach einem der Ansprüche 2 bis 8, **dadurch gekennzeichnet, dass** die zumindest zwei oder mehreren Leuchteinrichtungen (100) unabhängig voneinander durch die Steuereinrichtung ansteuerbar sind.

10. Kraftfahrzeug nach einem der Ansprüche 1 bis 9, **dadurch gekennzeichnet, dass** das Kraftfahrzeug zumindest eine Sensoreinrichtung umfasst, welche eingerichtet ist, in der Umgebung des Kraftfahrzeugs befindliche Verkehrsteilnehmer jeweils einzeln zu erfassen und Änderungen der Relativposition zwischen dem Kraftfahrzeug und den einzelnen Verkehrsteilnehmern zu berücksichtigen.

11. Kraftfahrzeug nach Anspruch 10, **dadurch gekennzeichnet, dass** die zumindest eine Sensoreinrichtung eine bildsensorgestützte Kamera, ein Nahfeld-Infrarotsensor oder ein Ultraschallsensor ist.

12. Kraftfahrzeug nach Anspruch 10 oder 11, **dadurch gekennzeichnet, dass** die Sensoreinrichtung bei Erfassen zumindest eines Verkehrsteilnehmers ein Signal an die Steuereinrichtung übermittelt, sodass die Steuereinrichtung jene Leuchteinrichtung (100) ansteuert, welche dem zumindest einen erfassten Verkehrsteilnehmer am nächsten ist.

## Claims

1. Motor vehicle (10) which is operable in a self-propelled state, wherein the motor vehicle comprises an adaptive lighting system (50) for generating adaptive light signal messages to individual road users, which lighting system (50) comprises at least one lighting device (100) and a control device for controlling the at least one lighting device (100),
wherein
the at least one lighting device (100) comprises
- at least one light source (110),
- at least one scattering optics (120) associated with the light source (110), which is arranged to scatter the light emittable by the at least one light source (110) by refraction in order to enable a diffuse luminous impression of the scattering optics (120)
- a support element (130) on which the at least one light source (110) is arranged, the support element (130) comprising a cable duct (140) for guiding at least one electrical line which connects the at least one light source (110) to the control device, and a first fastening means (150) for fastening the support element (130) or the lighting device (100) to the motor vehicle
- a cover (160) which can be fastened to the support element (130) by means of a second fastening means (170), the cover (160) being arranged in combination with the support element (130) in a state fastened to the support element (130), the scattering optics (120), and wherein the at least one lighting device (100) is arranged circumferentially around the motor vehicle in such a way that, when the at least one lighting device (100) is switched on, the scattering optics (120) can be perceived as an optically continuously illuminated illuminated ring.

2. Motor vehicle according to claim 1, **characterized in that** the lighting system (50) comprises at least two or more lighting devices (100), the at least two or more lighting devices (100) being arranged circumferentially around the motor vehicle in such a way that, when each lighting device (100) is switched on simultaneously, the scattering optics (120) of the lighting devices (100) can be perceived as an optically continuously illuminated illuminated ring.

3. Motor vehicle according to claim 1 or 2, **characterized in that** the at least one light source (110) is designed as an LED.

4. Motor vehicle according to claim 4, **characterized in that** the at least one LED is arranged on a printed circuit board, which printed circuit board is arranged on the carrier element (130).

5. Motor vehicle according to claim 1 or 2, **characterized in that** the at least one light source (110) is designed as a light guide with an LED, into which light guide light from the LED can be fed.

6. Motor vehicle according to one of claims 1 to 5, **characterized in that** the first fastening means (150) comprises screws and associated bore openings (151), the bore openings (151) being arranged on the carrier element (130), via which bore openings (151) the carrier element (130) can be fastened to the motor vehicle by means of the screws.

7. Motor vehicle according to any one of claims 1 to 6, **characterized in that** the second fastening means (170) comprises screws and associated bore openings (171), the bore openings (171) being arranged on the carrier element (130), via which bore openings (171) the cover (160) can be fastened to the carrier element (130) by means of the screws.

8. Motor vehicle according to one of the claims 1 to 7, **characterized in that** the at least one light source (110) of the at least one light device (100) are controlled and activated by the control device when the motor vehicle is in the self-propelled state.

9. Motor vehicle according to one of claims 2 to 8, **characterized in that** the at least two or more light devices (100) can be actuated independently of one another by the control device.

10. Motor vehicle according to one of claims 1 to 9, **characterized in that** the motor vehicle comprises at least one sensor device which is set up to detect road users located in the vicinity of the motor vehicle individually in each case and to take into account changes in the relative position between the motor vehicle and the individual road users.

11. Motor vehicle according to claim 10, **characterized in that** the at least one sensor device is an image sensor-supported camera, a near-field infrared sensor or an ultrasonic sensor.

12. Motor vehicle according to claim 10 or 11, **characterized in that** the sensor device transmits a signal to the control device when at least one road user is detected, so that the control device triggers that lighting device (100) which is closest to the at least one detected road user.

## Revendications

1. Véhicule automobile (10) pouvant fonctionner dans un état de conduite autonome, le véhicule automobile comprenant un système d'éclairage adaptatif (50) pour générer des messages de signalisation lumineuse adaptatifs à des usagers de la route individuels, lequel système d'éclairage (50) comprend au moins un dispositif d'éclairage (100) et un dispositif de commande pour commander le au moins un dispositif d'éclairage (100),
où
le au moins un dispositif d'éclairage (100)
- au moins une source lumineuse (110),
- au moins une optique de diffusion (120) associée à la source lumineuse (110), qui est conçue pour diffuser par réfraction la lumière pouvant être émise par la au moins une source lumineuse (110), afin de permettre une impression lumineuse diffuse de l'optique de diffusion (120),
- un élément de support (130) sur lequel est disposée la au moins une source lumineuse (110), l'élément de support (130) comprenant un canal de câble (140) pour le guidage d'au moins un câble électrique qui relie la au moins une source lumineuse (110) au dispositif de commande, et un premier moyen de fixation (150) pour la fixation de l'élément de support (130) ou du dispositif d'éclairage (100) sur le véhicule automobile,
- un couvercle (160) qui peut être fixé à l'élément de support (130) au moyen d'un deuxième moyen de fixation (170), le couvercle (160) étant agencé en combinaison avec l'élément de support (130) dans un état fixé à l'élément de support (130), l'optique de diffusion (120), et dans lequel l'au moins un dispositif d'éclairage (100) est disposé autour du véhicule automobile de telle sorte que, lorsque l'au moins un dispositif d'éclairage (100) est allumé, l'optique de diffusion (120) peut être perçue comme un anneau lumineux optiquement continu.

2. Véhicule automobile selon la revendication 1, **caractérisé en ce que** le système d'éclairage (50) comprend au moins deux ou plusieurs dispositifs d'éclairage (100), les au moins deux ou plusieurs dispositifs d'éclairage (100) étant disposés autour du véhicule automobile de telle sorte que, lors de l'allumage simultané de chaque dispositif d'éclairage (100), les optiques de diffusion (120) des dispositifs d'éclairage (100) peuvent être perçues comme un anneau lumineux optiquement lumineux en continu.

3. Véhicule automobile selon la revendication 1 ou 2, **caractérisé en ce que** l'au moins une source lumineuse (110) est conçue comme une LED.

4. Véhicule automobile selon la revendication 4, **caractérisé en ce que** l'au moins une LED est disposée sur une carte de circuit imprimé, laquelle carte de circuit imprimé est disposée sur l'élément de support (130).

5. Véhicule automobile selon la revendication 1 ou 2, **caractérisé en ce que** la au moins une source de lumière (110) est conçue comme un guide de lumière avec une LED, guide de lumière dans lequel la lumière de la LED peut être injectée.

6. Véhicule automobile selon l'une des revendications 1 à 5, **caractérisé en ce que** le premier moyen de fixation (150) comprend des vis et des ouvertures de perçage (151) associées, les ouvertures de perçage (151) étant disposées sur l'élément de support (130), ouvertures de perçage (151) par lesquelles l'élément de support (130) peut être fixé au véhicule automobile au moyen des vis.

7. Véhicule automobile selon l'une des revendications 1 à 6, **caractérisé en ce que** le deuxième moyen de fixation (170) comprend des vis et des orifices de perçage (171) associés, les orifices de perçage (171) étant disposés sur l'élément de support (130), orifices de perçage (171) par l'intermédiaire desquels le couvercle (160) peut être fixé à l'élément de support (130) au moyen des vis.

8. Véhicule automobile selon l'une des revendications 1 à 7, **caractérisé en ce que** l'au moins une source lumineuse (110) de l'au moins un dispositif d'éclairage (100) est commandée et activée par le dispositif de commande lorsque le véhicule automobile se trouve dans l'état de conduite autonome.

9. Véhicule automobile selon l'une des revendications 2 à 8, **caractérisé en ce que** les au moins deux ou plusieurs dispositifs d'éclairage (100) peuvent être commandés indépendamment les uns des autres par le dispositif de commande.

10. Véhicule automobile selon l'une des revendications 1 à 9, **caractérisé en ce que** le véhicule automobile comprend au moins un dispositif de détection qui est agencé pour détecter individuellement les usagers de la route se trouvant dans l'environnement du véhicule automobile et pour tenir compte des modifications de la position relative entre le véhicule automobile et les différents usagers de la route.

11. Véhicule automobile selon la revendication 10, **caractérisé en ce que** l'au moins un dispositif de détection est une caméra assistée par un capteur d'image, un capteur infrarouge à champ proche ou un capteur à ultrasons.

12. Véhicule automobile selon la revendication 10 ou 11, **caractérisé en ce que** le dispositif de détection transmet un signal au dispositif de commande lorsqu'il détecte au moins un usager de la route, de sorte que le dispositif de commande commande le dispositif d'éclairage (100) qui est le plus proche de l'au moins un usager de la route détecté.
